# FASCICULE DE BREVET EUROPEEN

(11) **EP 2 666 687 B1**
(45) Date de publication et mention de la délivrance du brevet: **07.10.2015**
(21) Numéro de dépôt: 13167129.9
(22) Date de dépôt: 08.05.2013
(51) Int. Cl.: B60T 13/74, B60T 8/40

(54) **Système de freins a servofrein électrique et procédé de gestion d'un tel système de freins**
Bremssystem mit elektrischer Servobremse, und Steuerungsverfahren eines solchen Bremssystems
Brake system with electric brake servo unit and method for managing such a brake system

(30) Priorité: 23.05.2012 FR 1254718
(43) Date de publication de la demande: 27.11.2013
(73) Titulaire: ROBERT BOSCH GMBH, 70442 Stuttgart (DE)
(72) Inventeur: Cagnac, Bastien, 60660 Cramoisy (FR)

(56) Documents cités:
- WO-A1-2011/026804
- DE-A1-102010 042 694

## Description

### Domaine de l'invention

La présente invention se rapporte à un système de freins à servofrein électrique agissant de façon commandée sur le maître-cylindre par une tige de poussée entrainée par le servofrein et actionnant le piston (piston primaire) du maître-cylindre, le servofrein étant muni d'un piston plongeur relié à la tige de commande de la pédale de frein, l'ensemble étant installé suivant un axe xx.

L'invention se rapporte également à un procédé de gestion d'un tel système de freins à servofrein électrique.

### But de l'invention

La présente invention a pour but de réaliser un système de freins à servofrein électrique et simulateur hydraulique, qui soit plus simple que les systèmes existants en simplifiant la structure du système et en permettant au conducteur de faire monter la pression dans le maître-cylindre après la saturation du servofrein ou encore de recoupler la pédale de frein en cas de besoin de forte dynamique.

### Etat de la technique

Un système de freins à servofrein du type défini ci-dessus est déjà connu. Le document WO 2011/026804 A1 décrit les caractéristiques suivantes de la revendication 1: système de freins à servofrein électrique agissant de façon commandée sur le maître-cylindre par une tige de poussée entrainée par le servofrein et actionnant le piston du maître-cylindre, le servofrein étant muni d'un piston plongeur relié à la tige de commande de la pédale de frein, l'ensemble étant installé suivant un axe, comprenant - un simulateur de frein pour simuler le saut et la réaction du frein sur la pédale, installé entre le piston d'assistance du servofrein électrique et le piston plongeur, et comprenant :- un corps de simulateur dans l'axe du piston plongeur et du piston d'assistance, formant une chambre de simulateur délimitée dans le corps de simulateur par le piston plongeur et le piston d'assistance entre lesquels un piston intermédiaire libre subdivise la chambre, en * un volume arrière avec le piston plongeur, * un volume avant avec le piston d'assistance, - le piston plongeur poussant par un ressort de saut sur le piston intermédiaire qui lui-même appuie contre le fond opposé de la chambre de simulateur par un ressort de rappel.

### Exposé et avantages de l'invention

A cet effet, l'invention a pour objet un système de freins à servofrein électrique du type défini ci-dessus caractérisé en ce qu'un simulateur de frein pour simuler le saut et la réaction du frein sur la pédale, installé entre le piston d'assistance du servofrein électrique et le piston plongeur, et comprenant :
- un corps de simulateur dans l'axe xx du piston plongeur et du piston d'assistance, formant une chambre de simulateur délimitée dans le corps de simulateur par le piston plongeur et le piston d'assistance entre lesquels un piston intermédiaire libre muni d'un orifice de fuite permettant son déplacement avec échange de liquide, subdivise la chambre,
   * Un volume arrière avec le piston plongeur,
   * un volume avant avec le piston d'assistance,
- le piston plongeur poussant par un ressort de saut sur le piston intermédiaire qui lui-même appuie contre le fond opposé de la chambre de simulateur par un ressort de rappel,
   le ressort de saut étant dimensionné pour simuler le saut du frein et le ressort de rappel simulant la réaction du frein sur la pédale de frein.

Ce système de freins a l'avantage d'une réalisation particulièrement simple et compacte de la combinaison du simulateur et du servofrein. La commande de ce frein est également plus simple.

Suivant une caractéristique particulièrement avantageuse, la chambre de simulateur est reliée au réservoir par une conduite équipée d'une électrovanne commandée,
- un circuit de commande relié à un capteur de course détectant le mouvement du piston plongeur commandé par la pédale de frein pour gérer le fonctionnement du servomoteur électrique et de l'électrovanne,
- l'électrovanne ouvrant la conduite pour le mode de fonctionnement normal du frein jusqu'à la fin de l'assistance par le servomoteur et pour le mode de fonctionnement de secours mécanique, le piston plongeur s'appuyant alors contre le piston d'assistance avec interposition neutre du piston intermédiaire et le piston d'assistance poussant le piston du maître-cylindre par la tige de poussée,
- l'électrovanne étant fermée pour le fonctionnement normal à la fin de l'assistance et pour le fonctionnement hydraulique de secours pour isoler le volume de liquide dans la chambre de simulateur et constituer une transmission hydraulique, entre le piston plongeur et le piston d'assistance transmettant directement la poussée exercée sur la pédale de frein au piston du maitre-cylindre par l'intermédiaire de la liaison rigide constituée par la tige de commande, le piston plongeur, le volume de liquide dans la chambre de simulateur, le piston d'assistance et le poussoir.

Ainsi le système de freins permet de recoupler la pédale de frein en cas de forte dynamique au-delà de la saturation du servofrein électrique. Le système offre également toutes les sécurités en cas de défaillance du servofrein électrique et de sa partie hydraulique, par action mécanique directe sur le maître-cylindre ou par l'intermédiaire d'un « piston hydraulique » en cas de défaillance du seul servofrein électrique.

Suivant une autre caractéristique avantageuse, la chambre de simulateur est formée par un alésage de grand diamètre côté servofrein, fermé par un couvercle muni d'un alésage de guidage du piston d'assistance et l'autre côté du corps du simulateur comporte un alésage de petit diamètre recevant le piston plongeur, l'alésage de petit diamètre formant avec l'alésage de grand diamètre un épaulement, le piston intermédiaire libre étant guidé dans l'alésage de grand diamètre.

Suivant une autre caractéristique avantageuse, le piston intermédiaire libre a une forme de coupelle composée d'une cavité cylindrique munie d'une collerette périphérique, la cavité cylindrique correspondant sensiblement au diamètre de l'alésage de petit diamètre pour recevoir l'extrémité du ressort de saut et la collerette de la coupelle forme avec la cavité, sur l'autre face du piston, un logement périphérique recevant l'extrémité du ressort de rappel, le fond de la cavité constituant la surface d'appui du piston plongeur et du piston d'assistance.

Suivant une autre caractéristique avantageuse, le piston plongeur est formé d'un corps recevant d'un côté la tige de commande et prolongé de l'autre côté par un manchon logeant en partie le ressort de saut.

Ces différentes caractéristiques relatives au piston intermédiaire libre et au piston plongeur permettent de réaliser un système de frein particulièrement compact. Le système est encore plus compact si le piston d'actionneur passe sur le boîtier du simulateur.

Suivant une autre caractéristique avantageuse, l'alésage de petit diamètre du corps comporte une gorge d'alimentation en liquide hydraulique, bordée par deux joints périphériques, la gorge étant reliée au réservoir de liquide de frein, le manchon ayant des perçages d'alimentation répartis sur une couronne située en regard de la gorge lorsque le piston plongeur est en position de repos, la communication entre l'intérieur du manchon (chambre de simulateur) et la gorge étant coupée après le passage du saut par le piston plongeur.

Suivant une autre caractéristique, le piston d'assistance comporte une collerette d'entraînement logée dans le piston d'actionneur et un cylindre fermé traversant l'alésage du couvercle du simulateur pour pénétrer dans la chambre en étant entouré du ressort de rappel, le fond du cylindre constituant la surface d'appui pour le fonctionnement en mode de secours hydraulique et en mode de secours mécanique.

Ces différentes caractéristiques participent à la compacité de l'ensemble constitué par le simulateur et le servofrein électrique.

Suivant une autre caractéristique, le système de freins comporte un circuit de commande et un capteur de pression relié au volume arrière de la chambre de simulateur, compris entre le piston d'assistance et le piston intermédiaire pour détecter la pression régnant dans ce volume et transmettre un signal de pression au circuit de commande, le circuit de commande étant relié à l'électrovanne et au moteur pour commander le fonctionnement normal du servofrein et les fonctionnements de secours. Ce circuit de commande peut être un circuit de commande propre au système de freins ou faire partie du circuit de gestion générale du fonctionnement du moteur et du véhicule.

Enfin, l'invention a pour objet un procédé de gestion d'un système de freins à servofrein électrique tel que défini ci-dessus, ce procédé étant caractérisé en ce qu'en mode de fonctionnement normal, le circuit de commande agit sur le moteur du servofrein et l'électrovanne pour mettre en communication la chambre du simulateur et le réservoir pour permettre l'actionnement du servofrein par le déplacement de la tige de commande et du piston plongeur, la tige de poussée étant uniquement entrainée par le piston d'actionneur,
- en fin de course de servofrein, la tige de poussée est poussée par actionnement hydraulique en fermant l'électrovanne pour bloquer le volume de liquide dans la chambre et transmettre la poussée de la pédale par le piston plongeur, le piston d'assistance et la tige de poussée sur le piston du maître-cylindre,
- en mode de fonctionnement hydraulique de secours, le circuit de commande met l'électrovanne en position de fermeture et coupe la communication du fluide entre la chambre de simulateur et le réservoir, la tige de poussée étant uniquement actionnée par le déplacement du piston plongeur, le volume isolé dans la chambre, le piston d'assistance et la tige de poussée,
- en mode de fonctionnement mécanique de secours, le circuit de commande ouvre l'électrovanne mettant en communication la chambre de simulateur et le réservoir de liquide de frein pour que le piston plongeur pousse directement sur le piston d'assistance avec interposition du piston libre,
- en mode de fonctionnement de secours hydraulique, le circuit de commande met l'électrovanne en position de fermeture coupant la communication de fluide entre la chambre de simulateur et le réservoir, la tige de poussée étant uniquement actionnée par le déplacement du piston plongeur, le volume isolé dans la chambre, le piston d'assistance et la tige de poussée.

### Dessins

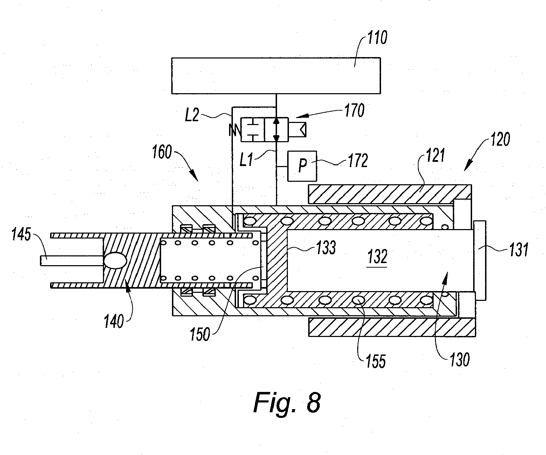

La présente invention sera décrite ci-après de manière plus détaillée à l'aide d'un mode de réalisation d'un système de freins à servofrein électrique et simulateur de frein et d'une variante représentés schématiquement à titre d'exemple dans les dessins annexés dans lesquels :
- la figure 1 est une vue schématique du système de freins selon l'invention,
- les figures 2 à 7 montrent différents états de fonctionnement du système de freins de la figure 1, en se limitant aux éléments principaux du frein et de son simulateur, à savoir
   ★ la figure 2 montre la position du frein au repos ou au début d'une action de frein, au passage du saut,
   ★ la figure 3 montre la fin du saut,
   ★ la figure 4 montre l'actionnement du frein en mode normal par le servofrein électrique et la réaction du ressort de rappel sur le piston plongeur et la tige de commande reliée à la pédale,
   ★ la figure 5 montre la fin de l'action du servofrein électrique et le début de l'action du piston plongeur sur le piston d'assistance par transmission hydraulique,
   ★ la figure 6 montre la fin du mode d'assistance et une forte action sur la pédale de frein ainsi que le mode de fonctionnement hydraulique de secours en cas de défaillance du servofrein,
   ★ la figure 7 montre le mode de fonctionnement mécanique de secours avec freinage de secours par le piston plongeur agissant directement sur le piston d'assistance, et
   ★ la figure 8 montre une variante de réalisation du système de freins selon l'invention.

### Description de modes de réalisation de l'invention

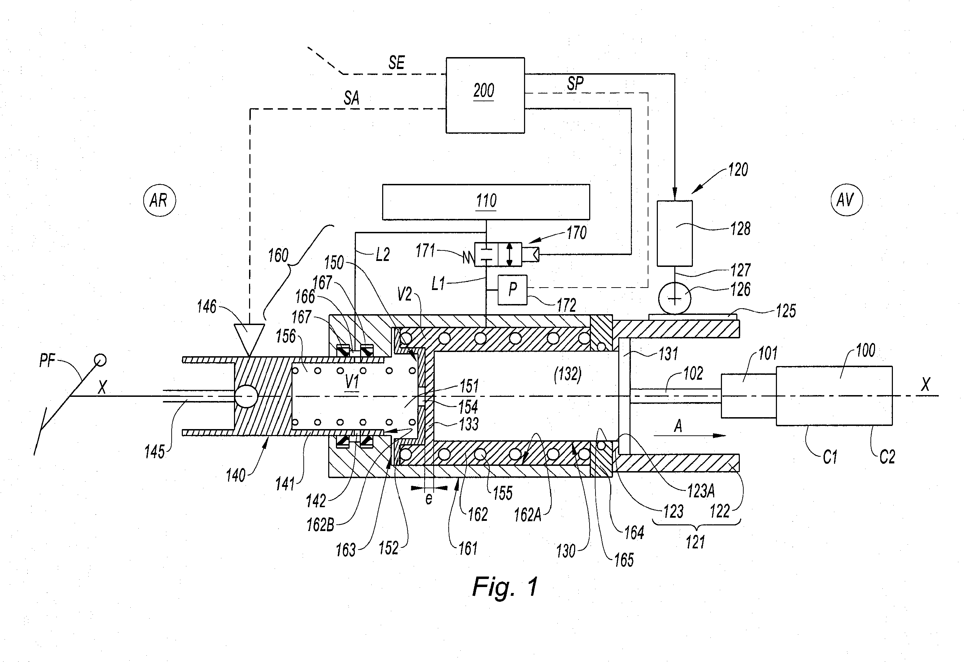

Selon la figure 1, l'invention a pour objet un système de freins équipé d'un servofrein électrique 120 commandant le maître-cylindre 100 en agissant sur le piston 101 par l'intermédiaire du piston d'assistance 130 entraîné par le servofrein 120 commandé et relié par un piston plongeur 140 à la tige de commande 145 actionnée par la pédale de frein PF.

Pour faciliter la description, on a choisi une orientation conventionnelle avec un côté avant AV (côté du maître-cylindre) et un côté arrière AR (côté de la pédale de frein PF) ainsi qu'un axe xx suivant lequel fonctionnent le servofrein, le simulateur et le maître-cylindre.

De manière plus détaillée, le système de freins dont seules les parties liées au servofrein électrique 120 et au maître-cylindre de frein 100 sont représentées, se compose du maître-cylindre 100, en général un maître-cylindre tandem, ayant un piston 101 (piston primaire) et le cas échéant, un piston secondaire. Le maître-cylindre 100 fournit du liquide de frein sous pression à deux circuits de frein C1, C2 reliés aux freins des roues. Le maître-cylindre 100 est également relié au réservoir de liquide de frein 110 par une liaison non représentée. Le maître-cylindre 100 met en pression le liquide de frein pour le ou les deux circuits de frein C1, C2 en étant lui-même actionné par le servofrein 120 déclenché par une demande de freinage liée à une action sur la pédale de frein PF par l'intermédiaire d'un simulateur de frein 160 simulant la réaction des freins sur la pédale de frein, c'est-à-dire d'abord le saut puis la réaction proprement dite des freins.

Le servofrein électrique 100 se compose d'un entraînement à crémaillère formé d'une crémaillère 125 portée par le piston d'actionneur 121 et entraînée par un pignon 126 porté par une transmission 127 commandée par un moteur électrique 128. Le servofrein électrique 120 est commandé par un circuit de commande 200 recevant différents signaux détaillés ultérieurement.

En entrée, le système de freins se compose de la pédale de frein PF reliée par une tige de commande 145 à un piston plongeur 140. Le piston plongeur 140 et le maître-cylindre 100, avec son ou ses pistons 101 et la tige de poussée 102, sont alignés suivant l'axe xx. Entre le piston plongeur 140 et le piston d'actionneur 121 est interposé un simulateur de frein 160. Le simulateur 160 se compose d'un boîtier 161 délimitant une chambre de simulateur 162. La chambre 162 est formée dans le boîtier 161 par un alésage 162A de grand diamètre relié à un alésage de petit diamètre 162B ; les alésages sont coaxiaux à l'axe xx et forment entre eux un épaulement 163.

L'alésage de grand diamètre 162A débouche du côté avant et selon ce mode de réalisation, il reçoit un couvercle 164 muni d'un alésage 165 coaxial à l'axe xx pour guider le piston d'assistance 130.

L'alésage de petit diamètre 162B débouche du côté arrière et reçoit le piston plongeur 140.

Le piston intermédiaire libre (ou flottant) 150 a, selon cet exemple, une cavité cylindrique 151 bordée par une collerette 152. Il est guidé dans l'alésage de grand diamètre 162A et peut s'appuyer contre l'épaulement 163. La cavité cylindrique 151 a sensiblement la même section que l'alésage de petit diamètre 162B.

Dans le corps du simulateur 160, le piston plongeur 140 et le piston d'assistance 130 délimitent la chambre 162, elle-même subdivisée en deux volumes, un volume arrière V1 et un volume avant V2 par un piston intermédiaire libre 150.

Le piston libre 150 délimite la chambre arrière V1 avec le piston plongeur 140 ; il délimite la chambre avant V2 avec le piston d'assistance 130. La chambre 162 du simulateur reçoit du liquide de frein et le piston intermédiaire libre 150 est muni d'un orifice calibré 153 pour permettre le passage freiné de liquide ou l'échange de liquide de frein entre les deux volumes avant V1 et arrière V2.

Le piston libre 150 est appuyé contre le piston plongeur 140 par l'intermédiaire d'un ressort de saut 154 et contre le fond du boîtier 161 par un ressort de rappel 155. Pour avoir un encombrement réduit tout en offrant au ressort, un espace disponible, le piston plongeur 140 est formé d'un corps muni d'un manchon 141 dont le côté avant est tourné vers le piston intermédiaire 150. Le ressort de saut 154 est logé dans le volume V1 principalement constitué par la cavité du manchon 141 du piston plongeur 140.

La seconde chambre V2, côté avant, est délimitée entre le piston libre 150 et le piston d'assistance 130. Le piston d'assistance 130 est composé d'une collerette 131 logée dans le piston d'actionneur 121 et retenue derrière la collerette 123 du piston 121. La collerette 131 porte un cylindre fermé 132 dont le fond 133 est tourné vers le piston intermédiaire 150. Le piston d'assistance 130 pénètre ainsi avec son fort volume cylindrique dans la chambre V2 pour se trouver par son fond 133, à proximité du piston intermédiaire 150 lorsque l'ensemble est au repos ou fonctionne normalement.

Le piston d'assistance 130 traverse l'alésage 123A de la collerette 123 du piston d'actionneur 121 ; la collerette 123 permet au piston d'actionneur 121 de tirer le piston d'assistance 130 pour les opérations de freinage normal avec assistance (direction A).

Cet entraînement par le piston d'actionneur 121 du piston d'assistance 130 se fait dans le sens de l'arrière vers l'avant selon l'orientation de la figure 1 (flèche A). Dans le sens opposé, la liaison entre le piston d'assistance 130 et le piston d'actionneur 121 est libre, ce qui signifie que si le piston d'actionneur 121 reste immobile, le piston d'assistance 130 peut se déplacer dans la direction de la flèche A.

L'alésage de grand diamètre 162A loge un ressort de rappel 155 autour de la partie cylindrique 132 du piston d'assistance 130. Ce ressort de rappel s'appuie par une extrémité contre la collerette du piston intermédiaire 150 et par son autre extrémité contre le couvercle 163 du corps 161.

Le piston d'actionneur 121 loge au moins en partie la tige de poussée 102 reliant le piston d'actionneur 130 au piston (piston primaire) 102 du maître-cylindre 100.

La chambre 162 du simulateur 160 est reliée au réservoir de liquide de frein 110 par une conduite L1 débouchant dans la cavité annulaire autour de la partie cylindrique 132, logeant le ressort de rappel 155. La conduite L1 est équipée d'une électrovanne 170, fermée en position normale, c'est-à-dire en l'absence de courant. Cette électrovanne 170 est commandée par le circuit 200. Son rappel en position fermée est assuré par exemple par un ressort 171.

Les parties V1, V2 de la chambre de simulateur 162 communiquent à travers le ou les perçages 154 réalisés dans le fond de la cavité 151 du piston intermédiaire 150 de sorte que les deux parties communiquent et se remplissent de liquide tout en permettant le déplacement du piston intermédiaire. Au moins l'un des perçages 154 est prévu dans le fond de la cavité cylindrique 151 pour éviter que ce fond ne colle au fond 133 du cylindre 132 du piston d'assistance 130.

Le remplissage en liquide de frein à partir du réservoir 110 de la chambre 162 se fait soit à travers la conduite L1 lorsque l'électrovanne 170 est en position ouverte, soit à partir d'une conduite L2 reliant le réservoir 110 en amont de l'électrovanne 120 à une gorge périphérique 166 réalisée au niveau de l'alésage de petit diamètre 162B. Cette gorge périphérique 166 est rendue étanche par deux joints d'étanchéité périphériques 167 de part et d'autre dans le sens de l'axe xx. Le manchon 141 du piston plongeur 140 comporte un ou de préférence plusieurs perçages 142 situés sur une couronne périphérique alimentée en liquide de frein (L2) lorsque le piston plongeur 140 occupe sa position de repos.

Au repos, la communication se fait donc entre le réservoir de liquide de frein 110, la première chambre V1 et à travers le perçage 154 du piston libre 150, le second volume V2 se remplit également de liquide de frein.

Dès que le piston plongeur 140 est déplacé, la communication avec le réservoir 110 par la conduite L2 est coupée et le volume V1 ou le volume V2 ne peuvent plus communiquer avec le réservoir 110 par la conduite L2.

L'électrovanne 170 est de préférence une électrovanne à tiroir ayant une position de coupure et une position de communication.

La conduite L1 reliant la chambre du simulateur 162 au réservoir 110 est surveillée par un capteur de pression 172 fournissant les signaux de pression SP au circuit de commande 200.

Le système comporte également un capteur de course 146 qui détecte le début de la course du piston plongeur 140 sous l'effet d'une action sur la pédale de frein PF pour que celui-ci lance le mouvement asservi réalisé par le moteur 128 actionnant alors la crémaillère 125 qui pousse le piston d'actionneur 121 vers la droite selon la figure 1 (flèche A) et tire le piston d'assistance 130 qui, s'appuyant sur la tige de poussée 102, pousse le piston 101 dans le maître-cylindre 100 et créant ainsi la pression de frein demandée.

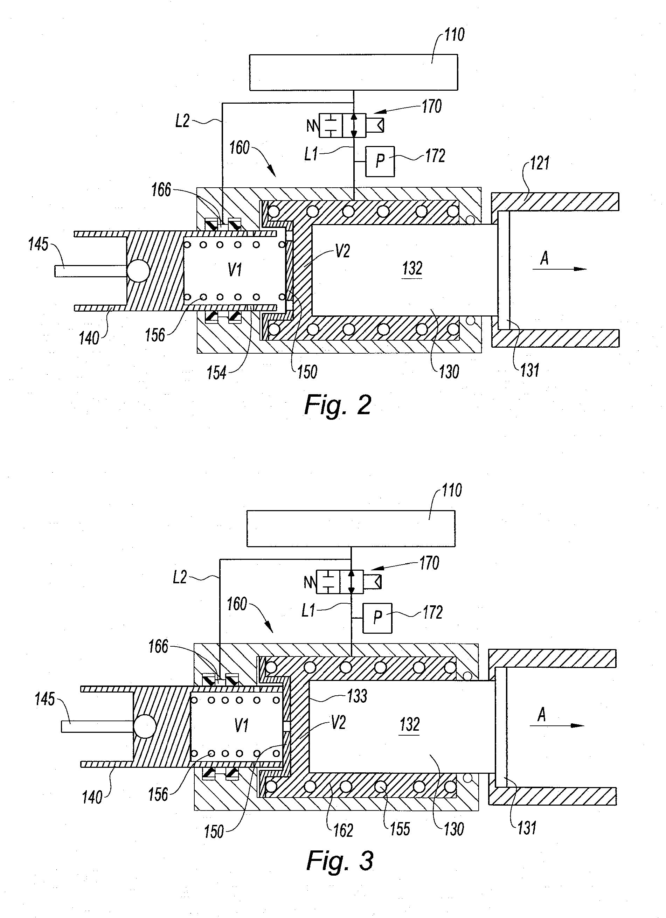

Le fonctionnement du système de freins sera décrit ci-après à l'aide des figures 2 à 7.

La figure 2 montre le début d'une action de freinage. La tige de commande 145 a été poussée par la pédale de frein et le capteur de course 146 a informé le circuit de commande 200 de cette demande de frein. Le circuit de commande 200 a mis en oeuvre le servofrein 120 qui, par l'intermédiaire de son moteur 128, déplace le piston d'actionneur 121 vers la droite (flèche A). Au cours de ce mouvement, la seconde chambre V2 du simulateur est en communication avec le réservoir 110, l'électrovanne 170 ayant été mise en position passante. Le piston plongeur 140 pousse sur le ressort de saut 156.

La figure 3 montre la fin du saut : le piston plongeur 140 a comprimé le ressort de saut 156 et il s'appuie ainsi directement contre le piston intermédiaire 150, lui-même soumis à l'action du ressort de rappel 155 dimensionné de façon appropriée.

La chambre V2 est toujours en communication avec le réservoir de liquide de frein 110 de sorte que le liquide hydraulique dans la chambre 162 du simulateur peut être refoulé sans opposer de résistance significative à l'avancée du piston plongeur 140 et ainsi à l'action d'enfoncement de la pédale de frein PF : seule la réaction du ressort de saut 156 est perceptible au niveau de la pédale de frein PF.

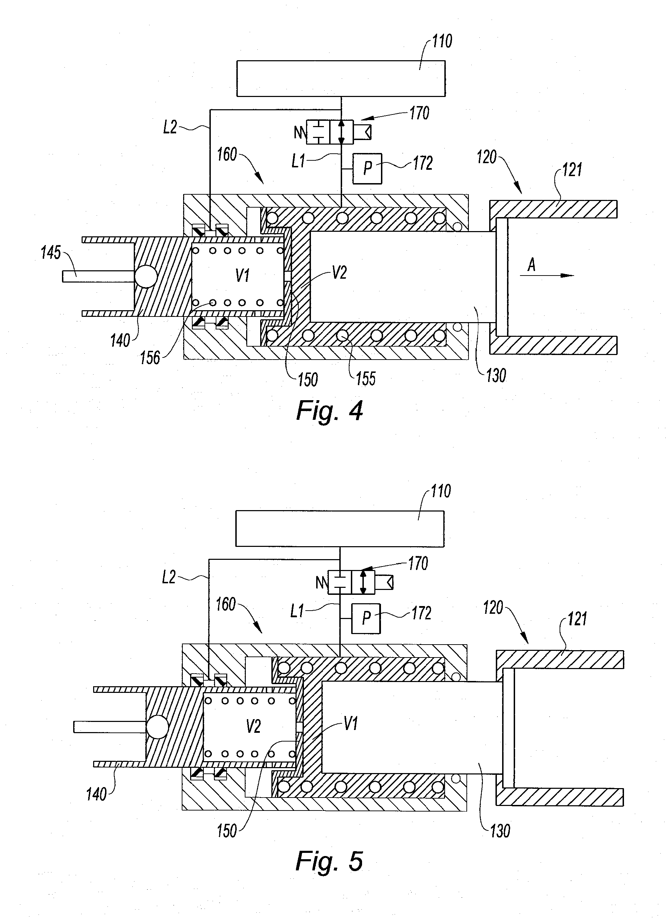

Selon la figure 4, à la fin du saut, le piston plongeur 140 appuie sur le piston intermédiaire 150 lui-même repoussé par le ressort de rappel 155 qui est alors le seul élément qui oppose une résistance à l'avancée du piston plongeur 130, la chambre V2 étant toujours en communication avec le réservoir 110.

Selon la figure 5, à la fin de la course du servofrein électrique 120, le circuit de commande 200 actionne l'électrovanne 170 qui coupe la conduite L1 reliant la chambre V2 au réservoir 110. Le volume de liquide de frein dans la chambre du simulateur 162 (volume V1 et volume V2) reste donc constant de sorte que toute avancée du piston plongeur 140 doit se traduire par une avancée du piston d'assistance 130, les mouvements de l'un et de l'autre étant liés par le rapport des sections des pistons 130, 140.

Selon les figures, la section du piston plongeur 140 étant plus réduite que la section du piston d'assistance 130 (le coefficient d'agrandissement est de l'ordre de 1,3), il en résulte que la démultiplication de la course ou réciproquement la multiplication de l'effort fourni en sortie correspond à 1,3.

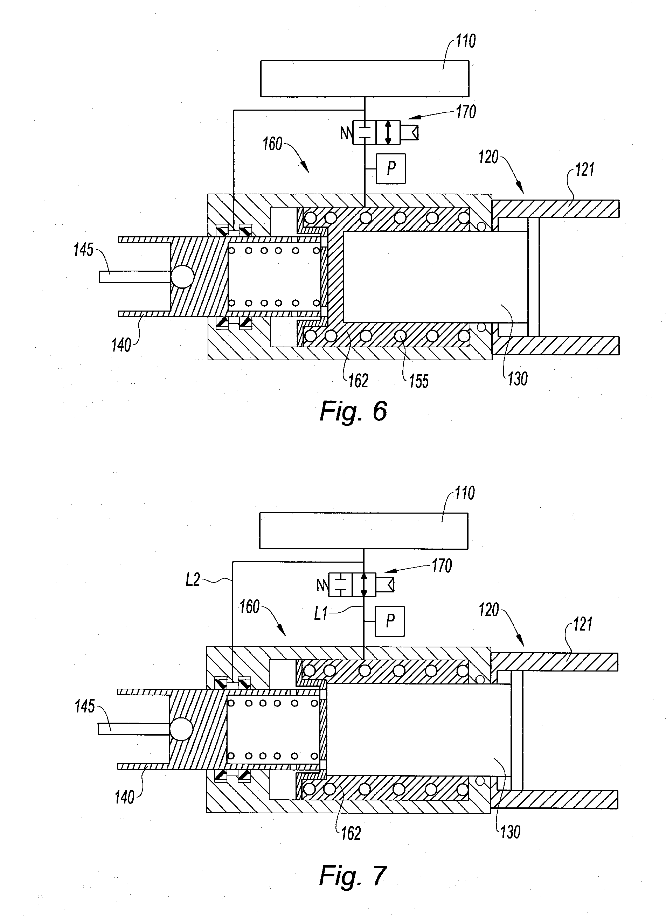

La figure 6 montre le mode dynamique, c'est-à-dire le mode de fonctionnement qui fait suite à celui représenté ci-dessus. En effet, le volume fermé de la chambre de simulateur 162 est rempli de liquide, par principe incompressible ou très difficilement compressible, l'électrovanne 170 étant fermée ; la poussée sur le piston plongeur 140 se traduit par une poussée et un déplacement du piston d'assistance 130 qui lui-même agit par l'intermédiaire de la tige de poussée 102 non représentée (voir figure 1) sur le piston 101 du maître-cylindre 100. La pression dans le maître-cylindre 100 augmente et cette pression est communiquée au liquide de frein alimentant le ou les circuits de frein C1, C2.

La figure 6 montre aussi le mode de freinage de secours pour défaut de servofrein électrique 120, le circuit hydraulique n'étant pas défectueux.

L'électrovanne 170 a coupé la conduite L1 reliant la chambre 162 du simulateur 160 au réservoir 110. Le piston plongeur 140, poussé par la tige de commande 145 et la pédale PF, peut donc pousser sur le liquide de frein à volume constant emprisonné dans le corps du simulateur 160 pour transformer et démultiplier le mouvement du piston plongeur 140 en un mouvement du piston d'assistance 130. Ce mouvement du piston d'assistance 130 est directement repris à droite par la tige de poussée 102 (figure 1) qui agit sur le piston 101 du maître-cylindre 100. Le piston d'actionneur 121 ne gène pas ce mouvement.

La figure 7 montre un fonctionnement de secours en mode purement mécanique. On suppose que le servofrein électrique 120 est défaillant et que la ou les conduites hydrauliques L1, L2 sont défectueuses. De manière schématique, on suppose que le volume de liquide de frein dans le simulateur 160 ne peut plus être maintenu constant.

Le liquide de frein n'oppose ainsi aucune résistance à l'avancée du piston plongeur 140 qui pousse directement sur le piston d'assistance 130 avec interposition du piston libre 150.

Cette poussée sur le piston plongeur 140 se voit opposer la force engendrée par le ressort de rappel 155.

La figure 9 montre une variante de réalisation qui se distingue du mode de réalisation déjà décrit en ce que le piston d'actionneur 121 occupe une position retournée, c'est-à-dire chevauche le boîtier du simulateur 160 ce qui permet un gain de place dans le sens de l'axe xx. Les autres éléments de ce système de freins sont les mêmes que ceux décrits précédemment ; ils portent les mêmes références et leur description ne sera pas reprise.

La présente invention s'applique à l'industrie des systèmes de freins pour l'équipement automobile.

### NOMENCLATURE

- 100: Maître-cylindre (tandem)
- 101: Piston (primaire)
- 102: Tige de poussée
- 110: Réservoir de liquide de frein
- 120: Servofrein électrique
- 121: Piston d'actionneur
- 122: Manchon
- 123: Collerette
- 123A: Alésage central
- 125: Crémaillère
- 126: Pignon
- 127: Transmission
- 128: Moteur électrique
- 130: Piston d'assistance
- 131: Collerette
- 132: Cylindre fermé
- 133: Fond
- 140: Piston plongeur
- 141: Manchon
- 142: Perçage d'alimentation
- 145: Tige de commande
- 146: Capteur de course
- 150: Piston intermédiaire libre
- 151: Cavité
- 152: Collerette
- 153: Orifice calibré
- 155: Ressort de rappel
- 156: Ressort de saut
- 160: Simulateur
- 161: Boîtier
- 162: Chambre de simulateur
- 162A: Alésage de grand diamètre
- 162B: Alésage de petit diamètre
- 163: Epaulement
- 164: Couvercle
- 165: Alésage
- 166: Gorge périphérique
- 167: Joint
- 170: Electrovanne
- 171: Ressort
- 172: Capteur de pression
- 200: Circuit de commande
- C1, C2: Circuit de frein
- EV: Electrovanne
- V1: Volume arrière
- V2: Volume avant
- L1: Conduite
- L2: Conduite
- SP: Signal de pression
- SE: Signal extérieur
- SA: Signal d'actionnement
- PF: Pédale de frein

## Revendications

1. Système de freins à servofrein électrique (120) agissant de façon commandée sur le maître-cylindre (100) par une tige de poussée (102) entrainée par le servofrein (120) et actionnant le piston (101) (piston primaire) du maître-cylindre, le servofrein (120) étant muni d'un piston plongeur (140) relié à la tige de commande (145) de la pédale de frein (PF), l'ensemble étant installé suivant un axe (xx), comprenant
- un simulateur de frein (160) pour simuler le saut et la réaction du frein sur la pédale, installé entre le piston d'assistance (130) du servofrein électrique (120) et le piston plongeur (140), et comprenant :
- un corps de simulateur (161) dans l'axe (xx) du piston plongeur (140) et du piston d'assistance (130), formant une chambre de simulateur (162) délimitée dans le corps de simulateur (161) par le piston plongeur (140) et le piston d'assistance (130) entre lesquels un piston intermédiaire libre (150) muni d'un orifice de fuite permettant son déplacement avec échange de liquide, subdivise la chambre (162), en un volume avant (V2) avec le piston d'assistance (130), un volume avant (V2) avec le piston d'assistance (130), un volume arrière (V1) avec le piston plongeur (140),
- le piston plongeur (140) poussant par un ressort de saut (156) sur le piston intermédiaire (150) qui lui-même appuie contre le fond opposé de la chambre de simulateur (162) par un ressort de rappel (155),
le ressort de saut (156) étant dimensionné pour simuler le saut du frein et le ressort de rappel (155) simulant la réaction du frein sur la pédale de frein (PF).

2. Système de freins selon la revendication 1,
**caractérisé en ce que**
la chambre de simulateur (162) est reliée au réservoir (110) par une conduite (L1) équipée d'une électrovanne commandée (170),
- un circuit de commande (200) relié à un capteur de course (146) détectant le mouvement du piston plongeur (140) commandé par la pédale de frein (PF) pour gérer le fonctionnement du servomoteur électrique (128) et de l'électrovanne (170),
- l'électrovanne (170) ouvrant la conduite (L1) pour le mode de fonctionnement normal du frein jusqu'à la fin de l'assistance par le servomoteur (128) et pour le mode de fonctionnement de secours mécanique, le piston plongeur (140) s'appuyant alors contre le piston d'assistance (130) avec interposition neutre du piston intermédiaire (150) et le piston d'assistance (130) poussant le piston (101) du maître-cylindre (100) par la tige de poussée (102),
- l'électrovanne étant fermée pour le fonctionnement normal à la fin de l'assistance et pour le fonctionnement hydraulique de secours pour isoler le volume de liquide dans la chambre de simulateur (162) et constituer une transmission hydraulique, entre le piston plongeur (140) et le piston d'assistance (130) transmettant directement la poussée exercée sur la pédale de frein (PF) au piston (101) du maitre-cylindre (100) par l'intermédiaire de la liaison rigide constituée par la tige de commande (145), le piston plongeur (140), le volume de liquide dans la chambre de simulateur (162), le piston d'assistance (130) et le poussoir (102).

3. Système de freins selon la revendication 1,
**caractérisé en ce que**
- la chambre de simulateur (162) est formée par un alésage de grand diamètre (162A) côté servofrein (120), fermé par un couvercle muni d'un alésage de guidage du piston d'assistance (130) et l'autre côté du corps du simulateur comporte un alésage de petit diamètre (163B) recevant le piston plongeur (140), l'alésage de petit diamètre formant avec l'alésage de grand diamètre un épaulement (163),
- le piston intermédiaire libre (150) étant guidé dans l'alésage de grand diamètre (162B).

4. Système de freins selon la revendication 3,
**caractérisé en ce que**
- le piston intermédiaire libre (150) a une forme de coupelle composée d'une cavité cylindrique (151) munie d'une collerette périphérique (152), la cavité cylindrique correspondant sensiblement au diamètre de l'alésage de petit diamètre (162B) pour recevoir l'extrémité du ressort de saut (156) et la collerette (152) de la coupelle forme avec la cavité (151), sur l'autre face du piston (150), un logement périphérique recevant l'extrémité du ressort de rappel (155),
- le fond de la cavité (151) constituant la surface d'appui du piston plongeur (140) et du piston d'assistance (130).

5. Système de freins selon la revendication 3,
**caractérisé en ce que**
le piston plongeur (140) est formé d'un corps recevant d'un côté la tige de commande (145) et prolongé de l'autre côté par un manchon (141) logeant en partie le ressort de saut (156).

6. Système de freins selon les revendications 1, 3 et 5,
**caractérisé en ce que**
- l'alésage de petit diamètre (162B) du corps (161) comporte une gorge d'alimentation en liquide hydraulique (166), bordée par deux joints périphériques (167),
- la gorge (166) étant reliée (L2) au réservoir de liquide de frein (110),
- le manchon (141) ayant des perçages d'alimentation (142) répartis sur une couronne située en regard de la gorge (166) lorsque le piston plongeur (140) est en position de repos, la communication entre l'intérieur du manchon (141) (chambre de simulateur (162)) et la gorge étant coupée après le passage du saut par le piston plongeur (140).

7. Système de freins selon la revendication 1,
**caractérisé en ce que**
le piston d'assistance (130) comporte une collerette d'entraînement (131) logée dans le piston d'actionneur (121) et un cylindre fermé (132) traversant l'alésage (123A) du couvercle du simulateur (160) pour pénétrer dans la chambre (162) en étant entouré du ressort de rappel (155),
le fond (133) du cylindre (132) constituant la surface d'appui pour le fonctionnement en mode de secours hydraulique et en mode de secours mécanique.

8. Système de freins selon la revendication 1,
**caractérisé en ce qu'**
il comporte un circuit de commande (200) et un capteur de pression (172) relié au volume arrière (V2) de la chambre de simulateur (162), compris entre le piston d'assistance (130) et le piston intermédiaire (150) pour détecter la pression régnant dans ce volume (V2) et transmettre un signal de pression (SP) au circuit de commande (200),
le circuit de commande (200) étant relié à l'électrovanne (170) et au moteur (128) pour commander le fonctionnement normal du servofrein (120) et les fonctionnements de secours.

9. Procédé de gestion d'un système de freins à servofrein électrique selon l'une quelconque des revendications 1 à 8,
**caractérisé en ce qu'**
- en mode de fonctionnement normal, le circuit de commande (200) agit sur le moteur (128) du servofrein (120) et l'électrovanne (170) pour mettre en communication la chambre du simulateur (162) et le réservoir (110) pour permettre l'actionnement du servofrein (120) par le déplacement de la tige de commande (145) et du piston plongeur (140), la tige de poussée (102) étant uniquement entrainée par le piston d'actionneur (121),
- en fin de course de servofrein (120), la tige de poussée (102) est poussée par actionnement hydraulique en fermant l'électrovanne (170) pour bloquer le volume de liquide dans la chambre (162) et transmettre la poussée de la pédale (PF) par le piston plongeur (140), le piston d'assistance (130) et la tige de poussée (102) sur le piston (101) du maître-cylindre (100),
- en mode de fonctionnement hydraulique de secours, le circuit de commande (200) met l'électrovanne (170) en position de fermeture et coupe la communication du fluide entre la chambre de simulateur (162) et le réservoir (110), la tige de poussée (102) étant uniquement actionnée par le déplacement du piston plongeur (140), le volume isolé dans la chambre (162), le piston d'assistance (130) et la tige de poussée (102),
- en mode de fonctionnement mécanique de secours, le circuit de commande (200) ouvre l'électrovanne (170) mettant en communication la chambre de simulateur (162) et le réservoir de liquide de frein (110) pour que le piston plongeur (140) pousse directement sur le piston d'assistance (130) avec interposition du piston libre (150),
- en mode de fonctionnement de secours hydraulique, le circuit de commande (200) met l'électrovanne (170) en position de fermeture coupant la communication de fluide entre la chambre de simulateur (162) et le réservoir (110), la tige de poussée (102) étant uniquement actionnée par le déplacement du piston plongeur (140), le volume isolé dans la chambre (162), le piston d'assistance (130) et la tige de poussée (102).

## Patentansprüche

1. Bremssystem mit elektrischer Servobremse (120), die gesteuert auf dem Hauptzylinder (100) durch eine Schubstange (102), die von der Servobremse (120) angetrieben wird und den Kolben (101) (Primärkolben) des Hauptzylinders betätigt, wirkt, wobei die Servobremse (120) mit einem Tauchkolben (140) versehen ist, der mit dem Steuerschaft (145) des Bremspedals (PF) verbunden ist, wobei die Baugruppe, die entlang einer Achse (xx) installiert ist, Folgendes umfassend:
- einen Bremssimulator (160), um den Sprung und die Reaktion der Bremse auf dem Pedal zu simulieren, der zwischen dem Unterstützungskolben (130) der elektrischen Servobremse (120) und dem Tauchkolben (140) installiert ist und umfasst:
- einen Simulatorkörper (161) in der Achse (xx) des Tauchkolbens (140) und des Unterstützungskolbens (130), wobei eine Simulatorkammer (162) gebildet wird, die in dem Simulatorkörper (161) durch den Tauchkolben (140) und den Unterstützungskolben (130) abgegrenzt ist, zwischen welchen ein freier Zwischenkolben (150), der mit einer Lecköffnung versehen ist, die seine Verlagerung mit Flüssigkeitsaustausch erlaubt, die Kammer (162) in
* ein hinteres Volumen (V1) mit dem Tauchkolben (140),
* ein vorderes Volumen (V2) mit dem Unterstützungskolben (130) teilt,
- wobei der Tauchkolben (140) eine Sprungfeder (156) auf den Zwischenkolben (150) schiebt, der wiederum gegen den entgegengesetzten Boden der Simulatorkammer (162) durch eine Rückstellfeder (155) aufliegt,
wobei die Sprungfeder (156) bemessen ist, um den Sprung der Bremse zu simulieren, und wobei die Rückstellfeder (155) die Reaktion der Bremse auf dem Bremspedal (PF) simuliert.

2. Bremssystem nach Anspruch 1,
**dadurch gekennzeichnet, dass**
die Simulatorkammer (162) mit dem Behälter (110) durch eine Leitung (L1) verbunden ist, die mit einem gesteuerten Magnetventil (170) ausgestattet ist,
- eine Steuerschaltung (200), die mit einem Hubsensor (146) verbunden ist, der die Bewegung des Tauchkolbens (140) erfasst, der von dem Bremspedal (PF) gesteuert wird, um den Betrieb des elektrischen Servomotors (128) und des Magnetventils (170) zu verwalten,
- wobei das Magnetventil (170) die Leitung (L1) für den normalen Betriebsmodus der Bremse bis zum Ende der Unterstützung durch den Servomotor (128) öffnet, und für den mechanischen NotBetriebsmodus der Tauchkolben (140) sich gegen den Unterstützungskolben (130) mit neutralem Einfügen des Zwischenkolbens (150) legt, und der Unterstützungskolben (130) den Kolben (101) des Hauptzylinders (100) durch die Schubstange (102) schiebt,
- wobei das Magnetventil für den normalen Betrieb am Ende der Unterstützung und für den hydraulischen Notbetrieb zum Isolieren des Flüssigkeitsvolumens in der Simulatorkammer (162) und zum Bilden einer hydraulischen Kraftübertragung zwischen dem Tauchkolben (140) und dem Unterstützungskolben (130), geschlossen wird, indem der Schub, der auf das Bremspedal (PF) ausgeübt wird, auf den Kolben (101) des Hauptzylinders (100) über die starre Verbindung übertragen wird, die aus dem Steuerschaft (145), dem Tauchkolben (140), dem Flüssigkeitsvolumen in der Simulatorkammer (162), dem Unterstützungskolben (130) und dem Stößel (102) gebildet ist.

3. Bremssystem nach Anspruch 1,
**dadurch gekennzeichnet, dass**
- die Simulatorkammer (162) durch eine Bohrung mit großem Durchmesser (162A) auf der Seite der Servobremse (120) ausgebildet ist, die durch einen Deckel verschlossen ist, der mit einer Führungsbohrung des Unterstützungskolbens (130) versehen ist, und auf der anderen Seite des Simulatorkörpers eine Bohrung mit kleinem Durchmesser (163B) umfasst, die den Tauchkolben (140) aufnimmt, wobei die Bohrung mit kleinem Durchmesser mit der Bohrung mit großem Durchmesser einen Ansatz (163) bildet,
- der freie Zwischenkolben (150) in der Bohrung mit großem Durchmesser (162B) geführt ist.

4. Bremssystem nach Anspruch 3,
**dadurch gekennzeichnet, dass**
- der freie Zwischenkolben (150) eine Schalenform hat, die aus einem zylindrischen Hohlraum (151), der mit einem Umfangskragen (152) versehen ist, gebildet ist, wobei der zylindrische Hohlraum im Wesentlichen dem Durchmesser der Bohrung mit kleinem Durchmesser (162B) entspricht, um das Ende der Sprungfeder (156) aufzunehmen, und der Kragen (152) der Schale mit dem Hohlraum (151) auf der anderen Seite des Kolbens (150) eine umfängliche Aufnahme bildet, die das Ende der Rückstellfeder (155) aufnimmt,
- der Boden des Hohlraums (151) die Auflageoberfläche des Tauchkolbens (140) und des Unterstützungskolbens (130) bildet.

5. Bremssystem nach Anspruch 3,
**dadurch gekennzeichnet, dass**
der Tauchkolben (140) aus einem Körper gebildet ist, der auf einer Seite den Steuerschaft (145) aufnimmt und auf der anderen Seite durch einen Stutzen (141) verlängert ist, der zum Teil die Sprungfeder (156) aufnimmt.

6. Bremssystem nach den Ansprüchen 1, 3 und 5,
**dadurch gekennzeichnet, dass**
- die Bohrung mit kleinem Durchmesser (162B) des Körpers (161) eine Hohlkehle zum Versorgen mit Hydraulikflüssigkeit (166) umfasst, die von zwei Umfangsdichtungen (167) umrandet ist,
- die Hohlkehle (166) mit dem Bremsflüssigkeitsbehälter (110) verbunden ist (L2),
- der Stutzen (141) Versorgungsbohrungen (142) hat, die auf einem Kranz verteilt sind, der gegenüber der Hohlkehle (166) liegt, wenn der Tauchkolben (140) in Ruhestellung ist, wobei die Verbindung zwischen dem Inneren des Stutzens (141) (Simulatorkammer (162)) und der Hohlkehle nach der Passage des Sprungs durch den Tauchkolben (140) unterbrochen wird.

7. Bremssystem nach Anspruch 1,
**dadurch gekennzeichnet, dass**
der Unterstützungskolben (130) einen Antriebskragen (131) umfasst, der in dem Betätigungskolben (121) aufgenommen ist, und einen geschlossenen Zylinder (132), der die Bohrung (123A) des Deckels des Simulators (160) durchquert, um in die Kammer (162) einzudringen, wobei er von der Rückstellfeder (155) umgeben ist,
wobei der Boden (133) des Zylinders (132) die Auflageoberfläche für den Betrieb im hydraulischen Notmodus und im mechanischen Notmodus bildet.

8. Bremssystem nach Anspruch 1,
**dadurch gekennzeichnet, dass**
es eine Steuerschaltung (200) und einen Drucksensor (172) umfasst, der mit dem hinteren Volumen (V2) der Simulatorkammer (162) zwischen dem Unterstützungskolben (130) und dem Zwischenkolben (150) liegend verbunden ist, um den Druck zu erfassen, der in diesem Volumen (V2) herrscht, und ein Drucksignal (SP) an die Steuerschaltung (200) zu übertragen,
wobei die Steuerschaltung (200) mit dem Magnetventil (170) und dem Motor (128) verbunden ist, um den normalen Betrieb der Servobremse (120) und die Notbetriebsarten zu steuern.

9. Verwaltungsverfahren eines Bremssystems mit elektrischer Servobremse nach einem der Ansprüche 1 bis 8,
**dadurch gekennzeichnet, dass**
- die Steuerschaltung (200) im normalen Betriebsmodus auf den Motor (128) der Servobremse (120) und das Magnetventil (170) einwirkt, um die Kammer des Simulators (162) und den Behälter (110) zu verbinden, um das Betätigen der Servobremse (120) durch Verlagerung des Steuerschafts (145) und des Tauchkolbens (140) zu erlauben, wobei die Schubstange (102) nur von dem Betätigungskolben (121) angetrieben wird,
- am Ende des Hubs der Servobremse (120) die Schubstange (102) durch hydraulisches Betätigen unter Schließen des Magnetventils (170) geschoben wird, um das Flüssigkeitsvolumen in der Kammer (162) zu blockieren und den Schub des Pedals (PF) durch den Tauchkolben (140), den Unterstützungskolben (130) und die Schubstange (102) auf den Kolben (101) des Hauptzylinders (100) zu übertragen,
- im hydraulischen Notbetriebsmodus die Steuerschaltung (200) das Magnetventil (170) in Schließposition stellt und die Verbindung der Flüssigkeit zwischen der Simulatorkammer (162) und dem Behälter (110) unterbricht, wobei die Schubstange (102) nur durch die Verlagerung des Tauchkolbens (140), das in der Kammer (162) isolierte Volumen, den Unterstützungskolben (130) und die Schubstange (102) betätigt wird,
- im mechanischen Notbetriebsmodus die Steuerschaltung (200) das Magnetventil (170) öffnet, wobei die Simulatorkammer (162) und der Bremsflüssigkeitsbehälter (110) in Verbindung gesetzt werden, damit der Tauchkolben (140) direkt auf dem Unterstützungskolben (130) mit Einfügen des freien Kolbens (150) schiebt,
- im hydraulischen Notbetriebsmodus die Steuerschaltung (200) das Magnetventil (170) in Schließposition stellt, wobei die Flüssigkeitsverbindung zwischen der Simulatorkammer (162) und dem Behälter (110) unterbrochen wird, wobei die Schubstange (102) nur durch die Verlagerung des Tauchkolbens (140), des in der Kammer (162) isolierten Volumens, den Unterstützungskolben (130) und die Schubstange (102) betätigt wird.

## Claims

1. Braking system with electric brake servo unit (120) acting in a controlled manner on the master cylinder (100) via a push-rod (102) driven by the brake servo unit (120) and actuating the piston (101) (primary piston) of the master cylinder, the brake servo unit (120) being equipped with a plunger piston (140) connected to the control rod (145) of the brake pedal (PF), the assembly being installed along an axis (xx),
comprising
- a brake simulator (160) for simulating the jump and the reaction of the brake on the pedal, installed between the boost piston (130) of the electric brake servo unit (120) and the plunger piston (140), and comprising:
- a simulator body (161) along the axis (xx) of the plunger piston (140) and of the boost piston (130), forming a simulator chamber (162) delimited in the simulator body (161) by the plunger piston (140) and the boost piston (130) between which a free intermediate piston (150) provided with a leakage orifice that allows it to move with exchange of liquid, subdivides the chamber (162),
into
* a rear volume (V1) with the plunger piston (140),
* a front volume (V2) with the boost piston (130),
- the plunger piston (140) pushing, via a jump spring (156) on the intermediate piston (150) which itself presses against the opposite end wall of the simulator chamber (162) via a return spring (155),
the jump spring (156) being rated so as to simulate the jump of the brake and the return spring (155) simulating the reaction of the brake on the brake pedal (PF).

2. Braking system according to Claim 1,
**characterized in that**
the simulator chamber (162) is connected to the reservoir (110) by a pipe (L1) equipped with a controlled electrically operated valve (170),
- a control circuit (200) connected to a travel sensor (146) detecting the movement of the plunger piston (140) controlled by the brake pedal (PF) in order to manage operation of the electric servo unit (128) and of the electrically operated valve (170),
- the electrically operated valve (170) opening the pipe (L1) for the normal brake-operation mode until the end of the boost by the servo unit (128) and for the emergency mechanical operation mode, the plunger piston (140) then pressing against the boost piston (130) with neutral interposition of the intermediate piston (150) and the boost piston (130) pushing the piston (101) of the master cylinder (100) via the push rod (102),
- the electrically operated valve being closed for normal operation at the end of the boost and for emergency hydraulic operation to isolate the volume of liquid in the simulator chamber (162) and constitute a hydraulic transmission between the plunger piston (140) and the boost piston (130) transmitting the thrust applied to the brake pedal (PF) directly to the piston (101) of the master cylinder (100) via the rigid connection made up of the control rod (145), the plunger piston (140), the volume of liquid in the simulator chamber (162), the boost piston (130) and the push rod (102).

3. Braking system according to Claim 1, **characterized in that**
- the simulator chamber (162) is formed by a large-diameter bore (162A) on the brake servo unit (120) side, closed by a cover provided with a guide bore for guiding the boost piston (130) and the other side of the body of the simulator comprises a small-diameter bore (163B) housing the plunger piston (140), the small-diameter bore forming a shoulder (163) with the large-diameter bore,
- the free intermediate piston (150) being guided in the large-diameter bore (162B).

4. Braking system according to Claim 3,
**characterized in that**
- the free intermediate piston (150) has the form of a cup made up of a cylindrical cavity (151) equipped with a peripheral flange (152), the cylindrical cavity substantially corresponding to the diameter of the small-diameter bore (162B) in order to accommodate the end of the jump spring (156) and the flange (152) of the cup forms, with the cavity (151), on the other face of the piston (150), a peripheral housing that accommodates the end of the return spring (155),
- the end wall of the cavity (151) constituting the bearing surface for the plunger piston (140) and for the boost piston (130).

5. Braking system according to Claim 3,
**characterized in that**
the plunger piston (140) is formed of a body one side of which houses the control rod (145) and the other side of which is extended by a sleeve (141) partially housing the jump spring (156).

6. Braking system according to Claims 1, 3 and 5,
**characterized in that**
- the small-diameter bore (162B) of the body (161) comprises a hydraulic fluid supply groove (166) flanked by two peripheral seals (167),
- the groove (166) being connected (L2) to the brake fluid reservoir (110),
- the sleeve (141) having supply drillings (142) distributed in a ring situated facing the groove (166) when the plunger piston (140) is in the rest position, communication between the inside of the sleeve (141) (simulator chamber (162)) and the groove being cut off after the plunger piston (140) has effected the jump.

7. Braking system according to Claim 1,
**characterized in that**
the boost piston (130) comprises a drive flange (131) housed in the actuator piston (121) and a closed cylinder (132) passing through the bore (123A) of the cover of the simulator (160) to penetrate the chamber (162) while being surrounded by the return spring (155),
the end wall (133) of the cylinder (132) constituting the bearing surface for operation in emergency hydraulic mode and in emergency mechanical mode.

8. Braking system according to Claim 1, **characterized in that**
it comprises a control circuit (200) and a pressure sensor (172) which is connected to the rear volume (V2) of the simulator chamber (162), comprised between the boost piston (130) and the intermediate piston (150) for detecting the pressure obtaining in this volume (V2) and transmitting a pressure signal (SP) to the control circuit (200),
the control circuit (200) being connected to the electrically operated valve (170) and to the motor (128) to control normal operation of the brake servo unit (120) and emergency operations.

9. Method for managing a braking system with electric brake servo unit according to any one of Claims 1 to 8,
**characterized in that**
- in normal operation mode, the control circuit (200) acts on the motor (128) of the brake servo unit (120) and the electrically operated valve (170) to place the chamber of the simulator (162) and the reservoir (110) in communication so as to allow the brake servo unit (120) to be operated by movement of the control rod (145) and of the plunger piston (140), the push rod (102) being driven only by the actuator piston (121),
- at the end of the travel of the brake servo unit (120), the push rod (102) is pushed by hydraulic actuation thereby closing the electrically operated valve (170) in order to track the volume of liquid in the chamber (162) and transmit the pressure on the pedal (PF) via the plunger piston (140), the boost piston (130) and the push rod (102) to the piston (101) of the master cylinder (100),
- in emergency hydraulic operation, the control circuit (200) places the electrically operated valve (170) in the closed position and cuts off the communication of fluid between the simulator chamber (162) and the reservoir (110), the push rod (102) being actuated only by the movement of the plunger piston (140), the volume isolated in the chamber (162), the boost piston (130) and the push rod (102),
- in the emergency mechanical operation mode, the control circuit (200) opens the electrically operated valve (170) placing the simulator chamber (162) and the brake fluid reservoir (110) in communication so that the plunger piston (140) presses directly on the boost piston (130) with the interposition of the free piston (150),
- in the hydraulic emergency operation mode, the control circuit (200) places the electrically operated valve (170) in the closed position cutting off fluidic communication between the simulator chamber (162) and the reservoir (110), the push rod (102) being actuated only by the movement of the plunger piston (140), the volume isolated in the chamber (162), the boost piston (130) and the push rod (102).
